Europäisches Patentamt

European Patent Office

Office européen des brevets

(11) Numéro de publication: **0 243 280**
**A1**

## (12) DEMANDE DE BREVET EUROPEEN

(21) Numéro de dépôt: **87420072.8**

(22) Date de dépôt: **13.03.87**

(51) Int. Cl.⁴: **G 01 N 30/24**

(30) Priorité: **25.04.86 FR 8606228**

(43) Date de publication de la demande:
**28.10.87 Bulletin 87/44**

(84) Etats contractants désignés:
**AT BE CH DE ES FR GB GR IT LI LU NL SE**

(71) Demandeur: **RHONE-POULENC RECHERCHES**
**25 Quai Paul Doumer**
**F-92408 Courbevoie Cedex (FR)**

(72) Inventeur: **Guillemin, Claude**
**32, rue de Longchamp**
**F-75116 Paris (FR)**

(74) Mandataire: **Ropital-Bonvarlet, Claude et al**
**Cabinet BEAU DE LOMENIE 99, Grande rue de la**
**Guillotière**
**F-69007 Lyon (FR)**

(54) Procédé et installation d'analyse en ligne d'un produit liquide par chromatogaphie en phase liquide.

㉗ - Analyse en ligne.
- Le dispositif pour la mise en oeuvre du procédé comprend :
. une sonde (20) de prélèvement et de traitement disposée au sein du produit,
. un chromatographe (39) associé à la sonde,
. un détecteur d'éluats (13) disposé à distance du chromatographe,
. et une unité de contrôle prenant en compte les variations d'apparition d'un pic remarquable par rapport aux mêmes pics d'un chromatogramme antérieur.
- Application à la chromatographie en phase liquide.

Fig.3

EP 0 243 280 A1

## Description

## PROCEDE ET INSTALLATION D'ANALYSE EN LIGNE D'UN PRODUIT LIQUIDE PAR CHROMATOGRAPHIE EN PHASE LIQUIDE

La présente invention concerne le domaine technique de l'analyse en ligne, par chromatographie en phase liquide, d'échantillons prélevés périodiquement dans un milieu au cours du déroulement d'un procédé industriel. Le prélèvement d'échantillons périodiques et leur analyse qualitative et/ou quantitative permettent de suivre l'avancement d'une réaction chimique ou d'une opération physique et de pouvoir apporter, en conséquence, soit de façon manuelle, soit de façon automatique, les modifications de conditions de marche de l'installation afin de suivre au plus près les spécifications préalablement définies pour l'obtention de produits de caractéristiques faiblement variables ou constantes.

Le domaine technique concerné est, plus particulièrement, celui des milieux liquides hétérogènes, tels que les dispersions de solides, liquides ou gaz dans une phase continue liquide.

En analyse automatique industrielle en ligne par chromatographie en phase liquide, on effectue, à l'aide d'une sonde, un prélèvement du milieu liquide à analyser et on véhicule ce prélèvement au moyen d'au moins une pompe à travers un circuit de circulation ou ligne d'échantillonnage comprenant des tubes, des filtres, des vannes, des raccords, etc ... Un tel circuit est destiné à amener l'échantillon prélevé vers un chromatographe en phase liquide situé géographiqement à une certaine distance du point de prélèvement de l'échantillon.

Cette technique est, généralement, satisfaisante lorsque le milieu liquide à analyser est homogène. Par contre, dans le cas du prélèvement d'un échantillon en milieu hétérogène comportant, par exemple, une phase dispersée solide ou polymérique dans un liquide, on assiste, le plus souvent, à des colmatages, des encrassements, des bouchages, voire des grippages d'éléments mobiles de la ligne d'échantillonnage. Ces incidents ont pour conséquence une perte de fiabilité et de crédibilité de l'analyse effectuée et, par ailleurs, accroissent, notablement, l'entretien du dispositif ou de l'installation d'analyse.

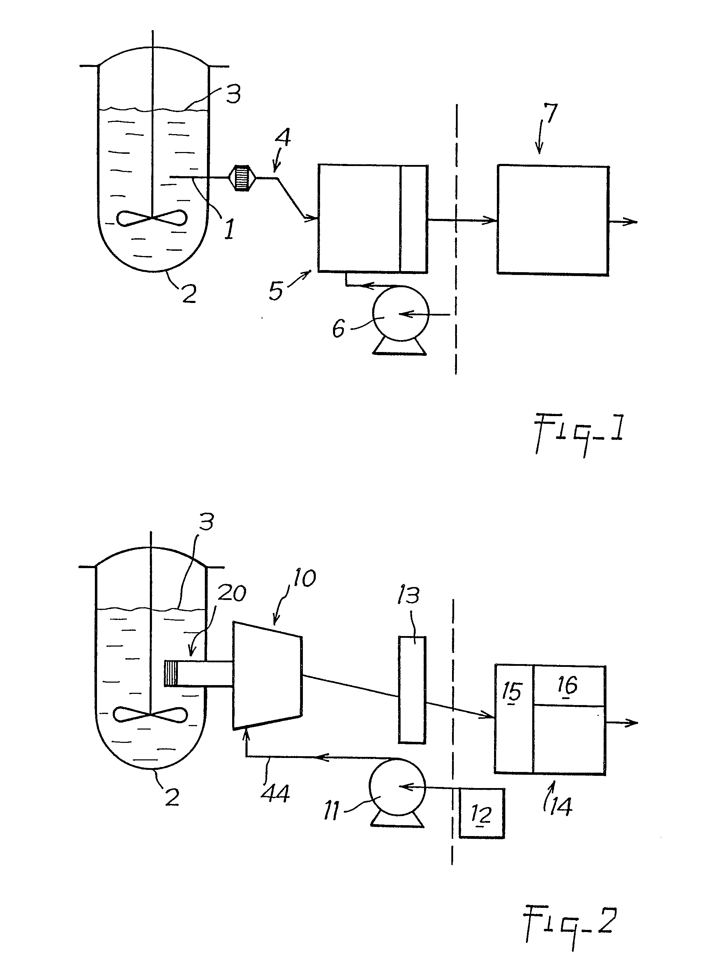

Pour tenter de minimiser cette contrainte, il est habituellement recherché de réduire la longueur de la ligne d'échantillonnage en préconisant une installation, du type schématisé à la fig. 1, qui représente l'art connu en la matière. Selon cette figure, une installation d'analyse en ligne comprend des moyens 1 de prélèvement et de filtration d'un échantillon à partir d'une capacité 2 de stockage ou de réaction du produit liquide 3 à analyser. Les moyens 1 sont raccordés par une ligne d'échantillonnage 4 à une unité d'analyse 5 qui est, généralement, disposée sur le site de la capacité 2, de façon à réduire le plus possible la longueur de cette ligne 4. L'unité d'analyse 5 comprend des moyens d'injection de l'échantillon et du fluide vecteur liquide par la pompe 6, une ou des colonnes de séparation et des moyens de détection. L'unité 5 est raccordée électriquement à une unité de contrôle 7 située à distance et permettant d'apprécier les résultats d'analyse et de commander la modification des paramètres de conduite du procédé industriel en fonction des caractéristiques analytiques relevées.

Pour qu'une telle installation fonctionne de manière satisfaisante, on sait que l'analyse doit être effectuée dans des conditions constantes de température et de débit du fluide vecteur. Or, en plaçant l'unité d'analyse 5 le plus près possible du site ou de la capacité 2, on conçoit que les variations de température du local industriel auront une incidence préjudiciable sur le bon déroulement des séquences d'analyse. C'est la raison pour laquelle il est habituel de construire l'unité 5 sous la forme d'un ensemble régulé en température.

En réalité, de tels moyens conduisent à une installation particulièrement délicate à mettre en oeuvre, chère et dont l'entretien doit, obligatoirement, être effectué par un personnel hautement qualifié. En dehors de cet aspect négatif, il convient de remarquer que les moyens préconisés ne permettent pas de supprimer totalement la ligne d'échantillonnage 4 dont les inconvéneints mentionnés précédemment subsistent.

Il convient aussi de signaler que l'existence d'une ligne d'échantillonnage 4 relativement longue implique, le plus souvent, un prélèvement et un traitement en continu d'échantillon, ce quie représente, d'une part, une consommation important du milieu liquide à analyser et pose, d'autre part, un problème d'évacuation de ce prélèvement continu lorsqu'il s'agit d'un produit à caractère polluant ou non recyclable.

L'objet de l'invention est de proposer un nouveau procédé et un nouveau dispositif particulièrement conçus pour réduire la longueur d'une ligne d'échantillonnage 4 et supprimer les raccords, les vannes, les filtres et les autres sources de colmatage, de manière à éliminer les inconvénients mentionnés ci-dessus.

L'objet de l'invention propose de réaliser, sous une forme sensiblement unitaire, à la fois les moyens de prélèvement, de traitement et d'analyse et de tirer profit de l'instabilité provoquée par les fluctuations de températures et de débit du fluide vecteur, en proposant un nouveau procédé de recherche, de reconnaissance et de mesure des pics des éluats séparés, s'appuyant sur une prise en compte de caractéristiques connues prélevées à partir d'un chromatogramme ou d'une collection de chromatogrammes antérieurs portant sur des échantillons du même produit.

En d'autres terms, le procédé préconisé repose sur la prise en compte de l'instabilité des paramètres, ce qui correspond à une démarche opposée à celle de l'art antérieur. Le procédé de l'invention vise à proposer des moyens de recherche, de reconnaissance et de mesure s'auto-adaptant aux variations de température et de débit susceptibles d'être imposés au fluide vecteur liquide par les conditions de fonctionnement et par la variation de la température du milieu environnant dans lequel est située l'unité de prélèvement de traitement et d'analyse et la capacité contenant le produit à analyser.

Pour atteindre les objectifs ci-dessus, le procédé conforme à l'invention est caractérisé en ce qu'il consiste à :
- prélever et traiter l'échantillon du produit à analyser par une tête de prélèvement et de traitement placée au sein dudit produit,
- transférer l'échantillon ainsi traité dans un chromatographe associé à la tête de prélèvement,
- établir en ligne le chromatogramme de l'échantillon,
- choisir, dans un chromatogramme antérieur du même produit réalisé dans des conditions de température et de débit données, un pic remarquable d'un composant connu et mesurer la position de ce pic en relation avec l'origine de la séquence d'analyse correspondante, afin de définir un terme de comparaison,
- rechercher dans le chromatogramme du présent échantillon la position du même pic remarquable,
- mesurer la différence de positions entre le terme de comparaison et le pic de l'analyse en cours, afin d'en extraire un facteur de correction de grandeur et de signe connus,
- affecter ce facteur de correction à la recherche et à la reconnaissance de position des différents autres pics du chromatogramme,
- et procéder ainsi pour chaque analyse successive d'un même produit afin d'adapter la recherche de la reconnaissance des pics en fonction des variations de température et de débit du fluide vecteur liquide mis en oeuvre pour effectuer l'analyse.

L'objet de l'invention a également pour objet un dispositif pour la mise en oeuvre du procédé ci-dessus, dispositif caractérisé en ce qu'il comprend:
- en tant qu'organe de prélèvement une sonde de prélèvement et de traitement disposée au sein du produit à analyser,
- un chromatographe associé à la sonde,
- un détecteur d'éluats placé à distance du chromatographe,
- et une unité de contrôle comprenant une machine calculatrice prenant en compte, lors de chaque analyse successive d'un même produit, au moins les variations d'apparitions d'un pic remarquable par rapport à un même pic d'un chromatogramme antérieur du même produit, pour calculer une différence d'apparition, en extraire un facteur de correction appliqué à la recherche et reconnaissance des différents autres pics du chromatogramme de l'échantillon en cours d'analyse.

Diverses autres caractéristiques ressortent de la description faite ci-dessous en référence aux dessins annexés qui montrent, à titre d'exemples non limitatifs, des formes de réalisation de l'objet de l'invention.

Les fig. 1 et 2 sont des vues schématiques illustrant, comparativement, une installation du type conventionnel et une installation d'analyse en ligne d'un produit liquide par chromatographie en phase liquide conforme à l'invention.

La fig. 3 est une coupe-élévation de l'un des éléments constitutifs du dispositif de mise en oeuvre du procédé.

La fig. 4 est une coupe transversale partielle, à plus grande échelle, d'un détail de construction.

La fig. 5 est une coupe transversale prise sensiblement selon la ligne V-V de la fig. 3.

La fig. 6 est une coupe transversale prise sensiblement selon la ligne VI-VI de la fig. 3.

La fig. 7 est une courbe schématique illustrant l'une des phases caractéristiques du procédé de l'invention.

La fig. 2 montre une installation de mise en oeuvre du procédé de l'invention. Selon cette figure, l'installation comprend un ensemble de prélèvement de traitement et d'analyse 10 qui est situé, à proprement parler, en relation directe avec la capacité 2. Cette unité 10 est alimentée par une pompe 11 en fluide liquide vecteur prélevé à partir d'un réservoir 12. L'unité 10 est reliée à distance à des moyens de détection 13 eux-mêmes raccordés à une unité de contrôle 14 placée dans un local de contrôle situé, généralement, hors du site abritant la capacité 2. L'unité de contrôle 14 comprend une machine calculatrice 15 destinée à gérer les informations analytiques fournies par les moyens 13, selon un processus comparatif auto-adaptable à partir d'un chromatogramme d'une collection de chromatogrammes stockés dans une mémoire d'archivage 16.

Le concept de l'installation selon la présente invention consiste donc à prévoir, directement sur la capacité 2, l'implantation d'un ensemble 10 destiné à être, au moins en partie, immergé dans le milieu 3 à analyser, de façon à assurer le prélèvement et le traitement physique d'un échantillon analysé immédiatement en ligne par un chormatographe dépourvu de tout système de régulation en température.

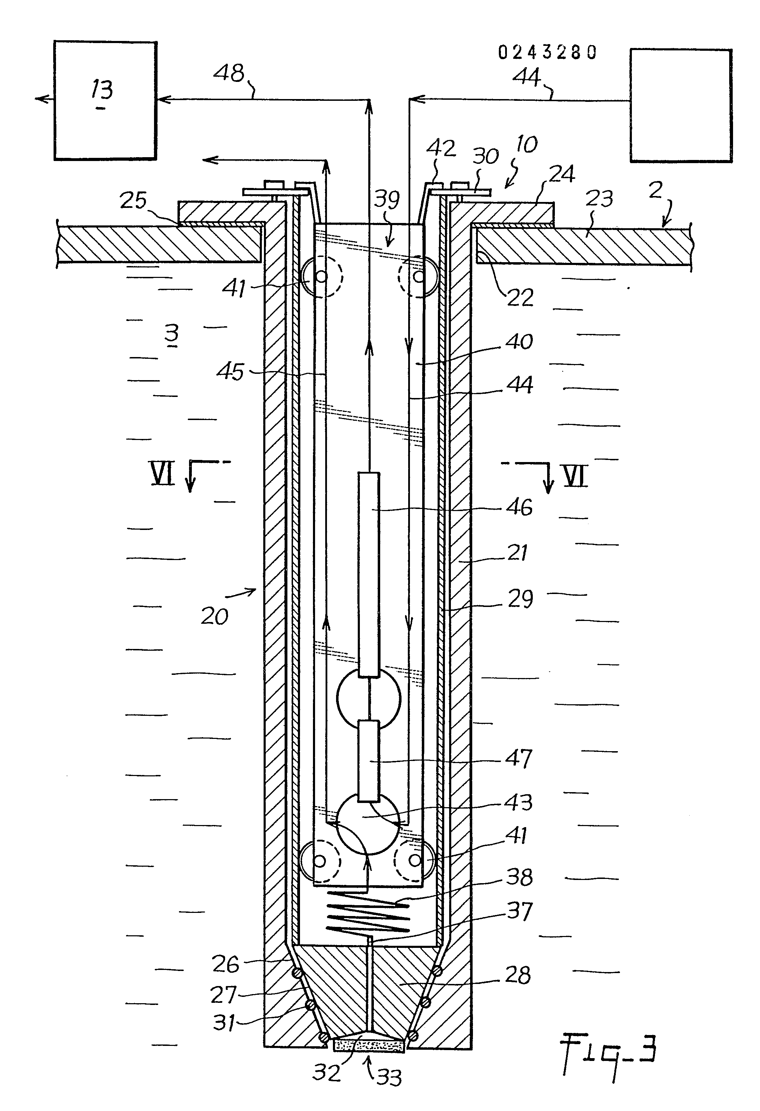

L'ensemble 10, plus parcticulièrement représenté à la fig. 3 comprend un organe de prélèvement 20, constitué sous la forme d'une sonde. Cet organe de prélèvement 20 comprend un corps tubulaire cylindrique 21 destiné à être monté et adapté avec étanchéité à travers un trou 22 de la paroi 23 de la capacité 2, de manière à plonger dans le produit liquide 3 devant être analysé. A cette fin, l'une des extrémités du corps tubulaire cylindrique 21 comorte une collerette 24 permettant d'assurer une adaptation amovible et le maintien, dans des conditions convenables, d'un joint d'étanchéité 25.

Le corps tubulaire cylindrique 21 comporte un siège 26, par exemple tronconique, destiné à l'appui d'une portée complémentaire 27 formée par une tête de prélèvement et de traitement 28 prévue en bout d'une fourrure tubulaire 29 incluse au corps 21 qui la porte. La tête 28 est, de préférence, constituée par une pièce indépendante usinée, rapportée à l'extrémité de la fourrure 29 dont l'autre extrémité est munie d'organes de fixation 30 aptes à immobiliser axialement la fourrure 29 à l'intérieur du corps cylindrique tubulaire 21. Les organes de fixation 30 sont également conçus de manière à constituer des organes de mise sous contrainte de joints 31, par exemple du type torique, interposés entre le siège 26 et la portée 27 complémentaire.

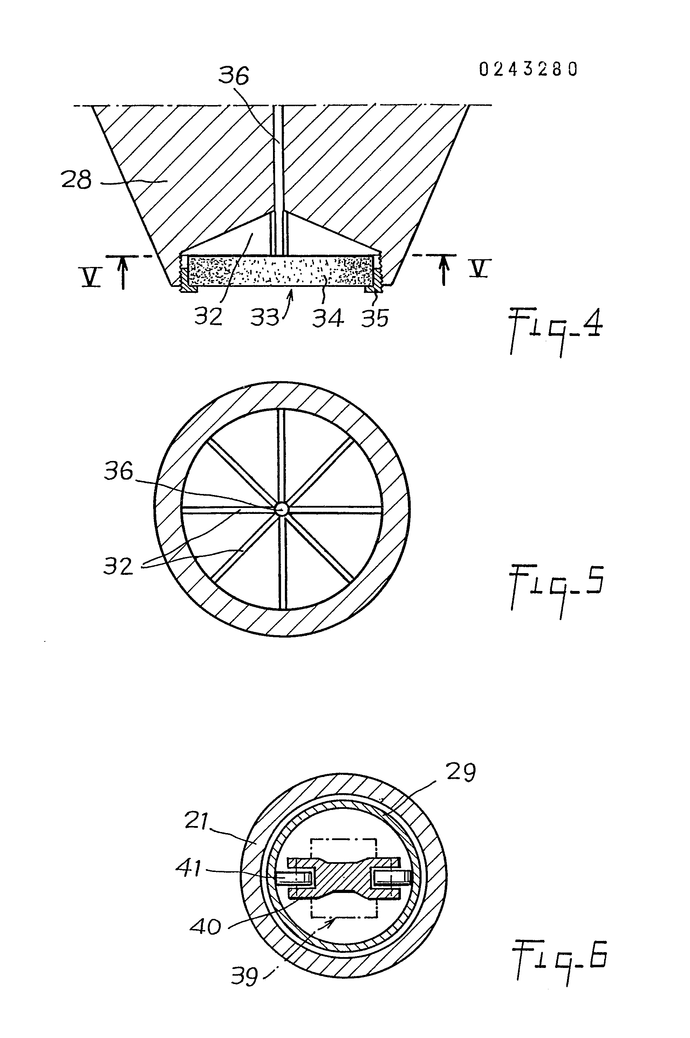

La tête de prélèvement 28 est usinée de manière à comporter, à partir de sa face affleurant sensiblement l'extrémité correspondante du corps 21, des creusures de collecte 32, par exemple, sensiblement radiales, comme illustré par les fig. 4 et 5. Les creusures 32 sont recouvertes par un élément de traitement physique 33, tel que de filtration ou d'ultra-filtration, de préférence amovible. L'élément 33 peut être constitué par une membrane ou par une pastille 34, de toute nature appropriée, notamment en matière frittée immobilisée par une bague amovible 35, par exemple vissée.

Les creusures 32 communiquent avec un conduit central 36 s'ouvrant à l'intérieur de la tête de prélèvement 28. Le conduit 36 est associé à des moyens 37 de raccordement avec un tube 38, de préférence constitué par un élément souple, du type capillaire préenroulé en hélice à l'état de repos. Le conduit 36 et le tube 37 constituent la ligne d'échantillonnage.

Selon une forme de réalisation préférée, l'ensemble 10 comprend, outre la sonde 20, un chromatographe 39 qui est, de préférence, incorporé à la sonde 20. Dans l'exemple illustré, le chromatographe 39 comprend (fig. 3 et 6) une platine de fixation et de support 40 qui est montée, par l'intermédiaire de galets de centrage 41 ou autres moyens, mobile axialement à l'intérieur de la fourrure 29, vis-à-vis de laquelle elle constitue, en quelque sorte, une âme diamétrale. La platine 40 est associée à des butées 42 prévues pour coopérer, notamment avec les organes de fixation 30, de façon à immobiliser axialement la platine en insertion complète à l'intérieur de la fourrure 29.

La platine 40 supporte, sur l'une ou sur deux de ses faces, les éléments constitutifs d'un chromatographe en phase liquide. De tels éléments comprennent une vanne d'injection 43, par exemple du type à quatre voies, dont l'une des entrées est raccordée au tube 38. L'autre entrée de la vanne d'injection 43 est raccordée à un tube 44 d'alimentation en fluide liquide vecteur et issu de la sortie de la pompe 11. L'une des sorties de la vanne d'injection 43 est raccordée à une canalisation 45 d'aspiration, nécessaire dans le cas où le produit liquide 3 est stocké ou contenu dans la capacité 2 sans être soumis à une pression de confinement. L'autre sortie de la vanne d'injection 43 est reliée à une colonne de séparation 46, éventuellement associée à une précolonne 47, et dont la sortie est reliée par une canalisation à distance 48 au détecteur 13.

L'ensemble 10 se caractérise par sa compacité structurelle et par l'implantation, au sein du milieu 3 à prélever, de la tête de prélèvement et de traitement 28 qui permet de réaliser directement in situ le traitement physique par filtration ou ultrafiltration de l'échantillon à prélever. La collecte de cet échantillon est assurée par les creusures 32 soit par l'intermédiaire de la pression régnant dans la capacité 2, soit par l'intermédiaire de moyens d'aspiration en relation avec la canalisation 45.

Cette forme de construction permet de réduire à la valeur minimale la longueur de la ligne d'échantillonnage entre le point de prélèvement et la vanne d'injection 43, étant donnée que cette dernière est, au mieux, incorporée à l'intérieur de la sonde 20. Dans un tel cas, la longueur de la ligne d'échantillonnage correspond uniquement à la longueur du tube 38 nécessaire pour autoriser, le cas échéant, le déplacement axial de la platine 40, en vue de son extraction par rapport à la fourrure 29.

Cette forme de réalisation permet de supprimer les coudes, les raccords, les filtres et tous les organes responsables d'une moindre circulation susceptibles d'engendrer des colmatages et des bouchages et qui augmentent les temps d'analyse.

Il doit, cependant, être considéré qu'un résultat équivalent pourrait être obtenu si le chromatographe 39 était disposé extérieurement à la sonde 20 en étant placé à faible distance de cette dernière.

Par ailleurs, étant donné que la tête de prélèvement et de traitement 28 est située directement au sein du milieu liquide à prélever, il en résulte une possibilité de décolmatage automatique de l'élément 33 de filtration ou ultra-filtration uniquement par les moyens de maintien en agitation ou en circulation du produit liquide 3, comme cela est généralement le cas dans les installations industrielles de production ou de stockage de produits intermédiaires ou finis.

On conçoit que, si cette forme de construction permet de réaliser un pseudo-conditionnement de température du chromatographe 39 qui est soumis à l'influence de la température du milieu environnant, c'est-à-dire le produit 3, il n'en va pas de même en revanche pour ce qui concerne le fluide liquide vecteur transitant par la pompe 11 et la canalisation d'alimentation 44. Un tel fluide vecteur sera donc soumis, obligatoirement, aux variations de température du site dans lequel est implantée la capacité 2 et, par suite, des variations corollaires de débit lui seront imposées.

De manière à ne pas être pénalisé par ces variations qui réduiraient à néant la possibilité d'implantation in situ de l'ensemble 10 de prélèvement et d'analyse, le procédé d'analyse selon l'invention fait intervenir la mise en oeuvre, dans l'unité de contrôle 14, de la machine calculatrice 15 dont le programme est fixé pour réaliser une compensation automatique de ses variations de température et de débit.

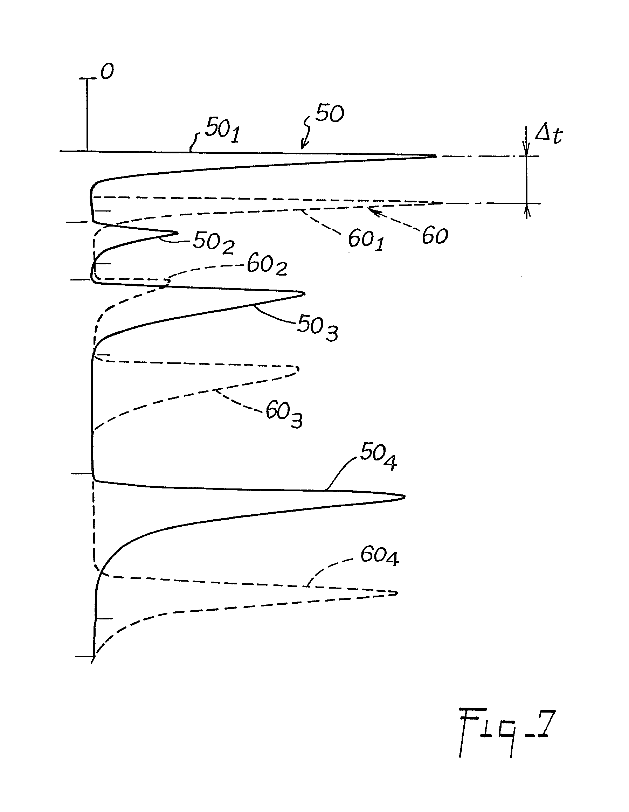

Pour assumer cette fonction, le programme de commande de la machine calculatrice 14 est établi pour assurer la recherche, la reconnaissance qualitative des différents pics correspondant aux différents éluats séparés en procédant de la façon suivante, telle qu'illustrée par la fig. 7.

Selon cette figure, un chromatogramme 50 d'un échantillon du produit 3 comprend un certain nombre de pics, tels que ceux tracés en trait continu et portant, respectivement, les références $50_1$ à $50_4$. Un tel chromatogramme, correspondant à l'analyse d'un échantillon du produit 3 effectuée dans des conditions considérées comme convenables, est stockée dans la mémoire d'archivage 16, de façon à constituer une base de référence pour l'appréciation d'un chromatogramme subséquent. Il peut donc s'agir d'un chromatogramme 50 correspondant, dans un premier temps, à des conditions optimales d'analyse ou, comme cela ressortira de ce qui suit, du dernier chromatogramme effectué sur la base d'un échantillon d'un même produit.

Lorsque le chromatogramme, correpondant à l'échantillon en cours d'analyse, est fourni à la machine calculatrice 15, tel que celui représenté en trait pointillée à la fig. 7 et désigné par la référence générale 60, celle-ci choisit un pic repère remarquable, se retrouvant toujours et, de préférence, se dégageant des autres pics. A titre d'exemple, ce pic peut être celui désigné par la référence $60_1$. La machine calculatrice recherche alors la présence d'un même pic dans le chromatogramme de référence 50, afin de le reconnaître et de pouvoir déterminer si ces deux pics, par exemple $60_1$ et $50_1$, se trouvent placés à une même distance de l'origine d'injection 0 ou si, au contraire, ces deux pics sont décalés dans un sens ou dans l'autre relativement. Si la machine calculatrice ne détecte aucun décalage, ceci signifie que les conditions d'analyse pour l'échantillon en cours sont identiques à celles de l'analyse précédente et que, par conséquent, il est possible de retrouver et reconnaître, aux mêmes endroits du chromatogramme à partir de l'origine 0, les mêmes pics caractéristiques et d'intérêt des différents éluats séparés.

Si, par contre, la machine calculatrice détecte un décalage, elle mesure la différence $\Delta_t$, soit entre les seuils d'apparition, soit, par exemple, entre les sommets des pics $60_1$ et $50_1$. La machine calculatrice prend en compte cette mesure $\Delta_t$ pour effectuer une correction d'autant dans le recherche et la reconnaissance des autres différents pics d'intérêt $60_1$ à $60_3$ qui peuvent ainsi être aisément identifiés et validés, même si leur surface s'est trouvée modifiée par la modification des conditions d'analyse. Les différents pics d'intérêt sont ainsi reconnus par leur temps de rétention relatif par rapport au pic repère, temps de rétention corrigé du facteur $\Delta_t$ qui est affecté selon son signe à l'une des bornes inférieure ou supérieure d'une fenêtre temporelle de détection appliquée par la machine à l'analyse du chromatogramme. Le décalage de la borne correspondante sera, soit constant pour tous les pics à reconnaître et à valider, soit incrémenté d'une certaine valeur en fonction du temps de rétention croissant des pics. Les nouveaux temps de rétention des pics sont archivés pur la prochaine séquence.

La machine calculatrice peut ensuite effectuer la mesure quantitative des différents pics reconnus, puis validés en procédant d'une manière connue par une méthode comparative.

Par cette prise en compte du facteur correctif $\Delta_t$, la machine calculatrice 15 s'adapte automatiquement aux variations de température et débit du fluide liquide vecteur et se trouve à même de reconnnaître et de valider les différents pics devant être recherchés puis mesurés.

La mesure quantitative des pics peut également s'appuyer sur le concept connu du "standard différé" consistant en l'injection d'un tiers composé pur dans chaque séquence analytique, cette injection étant différée par rapport à celle de l'échantillon, de telle sorte que le pic correspondant n'interfère pas avec les pics de l'échantillon. Le pic du standard différé peut servir de prérepère ou référence selon le procédé venant d'être décrit.

Dans la mise en oeuvre de cette méthode quantitative, le pic correspondant au standard différé n'est pas reconnu par son temps de rétention, mais par son aire préablement archivée. Lorsque le pic a été ainsi reconnu, les calculs de concentration des différents éluats par mesure des aires des pics correspondants s'effectue par rapport à l'aire du pic du "standard différé".

Mais on comprend que s'il y a évolution des temps de rétention des pics de l'échantillon, il est nécessaire d'ajuster, en conséquence, le temps d'injection du standard différé pour éviter l'interférence des pics. Selon l'invention, cet ajustement se fait par la machine 14 qui applique, au temps d'injection, l'amplitude et le signe du facteur correctif $\Delta_t$ à toute fonction temps qui règle la séquence analytique, telle que injection du standard différé et aussi toute commutation éventuelle de colonne, le temps final de la séquence analytique et le temps d'injection de la séquence suivante ou, plus généralement, toute fonction extérieure, ce qui permet, par exemple, de commander des vannes sur la prise d'échantillon ou sur le réacteur, etc...

Les variations de débit du fluide liquide vecteur, dues par exemple aux variations de température, influencent sensiblement les moyens de détection 13 qui peuvent alors fournir une réponse instable. Si l'aire du pic du standard différé varie pour de telles raisons de plus d'un certain pourcentage par rapport à l'aire du même pic de l'analyse précédente selon le procédé de l'invention, on déclenche, dans la séquence en cours, une second injection de standard différé en choisissant le temps d'injection pour éviter l'interférence de pics. La base de surface retenue pour la mesure quantitative des pics des éluats sera alors l'aire moyenne entre les aires des deux pics des deux injections de standard différé.

A titre d'exemple, une concentration de 0,6 % en poids de phénol dans un mélange contenant de l'hydroquinone et du pyrocatéchole (0,38 % d'hydroquinone et 0,25 % de pyrocatéchole dans de l'eau) est dosée avec une répétabilité de 1,5 % avec un débit stable.

On provoque alors une fluctuation du débit de 25 % qui devrait se traduire par une erreur de même amplitude sur le dosage du phénol. On observe que, grâce au procédé de l'invention, la réponse est validée avec une erreur maximum de 7 %.

Cet exemple illustre l'intérêt de la présente invention.

Ainsi que cela ressort de ce qui précède, la mise en oeuvre d'un ensemble de prélèvementet de traitement in situ et d'analyse, non thermostaté ou régulé en température, permet, par l'intermédiaire du procédé d'appréciation comparative décrit ci-dessus, de concevoir une installation disposant d'un faible temps de réponse et fournissant des résultats d'analyse prenant automatiquement en compte les variations de température et débit du fluide vecteur liquide injecté. Par rapport à l'art antérieur, une telle installation est donc de plus faible encombrement et d'un coût réduit.

En outre, le fait de placer l'ensemble 10 de prélèvement, de traitement et d'analyse au sein du produit à analyser réduit la quantité d'échantillon devant être prélevée en continu et permet une réduction de la durée de stagnation ou de confinement de l'échantillon dans la ligne d'échantillonnage, ce qui est favorable à l'obtention de chromatogrammes de caractéristiques plus sensiblement constantes.

L'invention n'est pas limitée aux exemples décrits et représentés, car diverses modifications peuvent y être apportées sans sortir de son cadre.

## Revendications

1 - Procédé d'analyse en ligne d'un produit liquide par chromatographie en phase liquide, caractérisé en ce qu'il consiste à :
- prélever et traiter l'échantillon du produit à analyser par une tête de prélèvement et de traitement placée au sein dudit produit,
- transférer l'échantillon dans un chromatographe associé à la tête de prélèvement,
- établir en ligne le chromatogramme de l'échantillon,
- choisir, dans un chromatogramme antérieur du même produit réalisé dans des conditions de température et de débit données, un pic remarquable d'un composant connu et mesurer la position de ce pic en relation avec l'origine de la séquence d'analyse correspondante, afin de définir un terme de comparaison,
- rechercher dans le chromatogramme du présent échantillon la position du même pic remarquable,
- mesurer la différence de positions entre le terme de comparaison et le pic de l'analyse en cours, afin d'en extraire un facteur de correction de grandeur et de signe connus,
- affecter ce facteur de correction à la recherche et à la reconnaissance de position des différents autres pics du chromatogramme,
- et procéder ainsi pour chaque analyse successive d'un même produit afin d'adapter la recherche de la reconnaissance des pics en fonction des variations de température et de débit du fluide vecteur liquide mis en oeuvre pour effectuer l'analyse.

2 - Procédé selon la revendication 1, caractérisé en ce que le pic remarquable choisi correspond à un composant connu du produit.

3 - Procédé selon la revendication 1, caractérisé en ce que le pic remarquable choisi correspond à celui du standard différé.

4 - Procédé selon l'une des revendications 1 à 3, caractérisé en ce qu'il consiste à effectuer le prélèvement, le traitement et l'analyse à l'intérieur d'une tête de prélèvement placée dans le produit à analyser.

5 - Procédé selon la revendication 1, caractérisé en ce qu'il consiste à affecter la grandeur et le signe du facteur de comparaison au temps d'injection d'un standard différé.

6 - Procédé selon la revendication 1 ou 5, caractérisé en ce qu'il consiste à comparer l'aire du pic du standard différé à l'aire du même pic d'une analyse précédente, à déclencher dans la même séquence d'analyse une seconde injection de standard différé si l'aire du premier pic varie d'une proportion donnée par rapport à celle du pic de l'analyse précédente, à calculer la valeur moyenne des aires des deux pics de standard différé de la même séquence et à retenir cette valeur moyenne en tant que base de calcul pour la mesure quantitative des aires des pics des éluats.

7 - Dispositif d'analyse en ligne d'un produit par chromatographie liquide, du type comprenant un organe de prélèvement de l'échantillon à analyser, une unité d'analyse et de détection et une unité de contrôle située à distance, caractérisé en ce qu'il comprend :
- en tant qu'organe de prélèvement et de traitement une sonde (20) de prélèvement et de traitement disposée au sein du produit à analyser,
- un chromatographe (39) associé à la sonde,
- un détecteur d'éluats (13), disposé à distance du chromatographe (39),
- et une unité de contrôle (14) comprenant une machine calculatrice (15) prenant en compte, lors de chaque analyse successive d'un même produit, au moins les variations d'apparition d'un pic remarquable par rapport à un même pic d'un chromatogramme antérieur du même produit pour calculer une différence d'apparition ($\Delta_t$) et en extraire un facteur de correction appliqué à la recherche et reconnaissance des différents autres pics du chromatogramme de l'échantillon en cours d'analyse.

8 - Dispositif selon la revendication 7, caractérisé en ce que le chromatographe (39) es incorporé à la sonde de prélèvement.

9 - Dispositif selon la revendication 7, caractérisé en ce que la sonde de prélèvement et de traitement (20) comprend un corps cylindrique porteur (21) destiné à traverser la paroi (23) d'une capacité contenant le produit (3) à analyser, un tel corps définissant à une extrémité une collerette (24) de fixation sur le réservoir et à son extrémité opposée un siège (26) sur lequel prend appui avec étanchéité la tête de prélèvement et de traitement (28) fixée à une fourrure (29) incluse au corps, ladite tête présentant, derrière un élément de traitement (33) amovible, des creusures de collecte (32) communiquant avec un tube souple spiralé (38) constituant une ligne d'échantillonnage conduisant le produit prélevé à une vanne (43) d'injection dans le chromatographe (39).

10 - Dispositif selon la revendication 9, caractérisé en ce que l'élément de traitement (33) est montée par une bague de fixation (35) amovible sur la tête (28).

11 - Dispositif selon la revendication 9 ou 10, caractérisé en ce que la fourrure (29) contient une âme mobile (40) insérée axialement et portant le chromatographe (39) comprenant au moins une colonne de séparation (46) reliée au détecteur (13), une vanne d'injection (43) raccordée au tube souple en hélice (38) et une canalisation d'amenée du fluide liquide vecteur (44).

0243280

Fig-1

Fig-2

0243280

Fig-3

Fig-4

Fig-5

Fig-6

Fig_7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 186 607  (G.T. PORTER) <br> * Colonne 1 * | 1 | G 01 N   30/24 |
| A | FR-A-2 491 215  (SOCIETE PROLABO) <br> * Pages 1-5 * | 1 | |
| A | FR-A-2 412 106  (S.R.T.I. et ELF) <br> * Revendications * | 4 | |

DOMAINES TECHNIQUES RECHERCHES (Int. Cl.4)

G 01 N   30/24
G 01 N   30/16
G 01 N   30/88

Le présent rapport de recherche a été établi pour toutes les revendications

| Lieu de la recherche | Date d'achèvement de la recherche | Examinateur |
|---|---|---|
| LA HAYE | 05-08-1987 | CALLEWAERT-HAEZEBROU |